# EUROPÄISCHE PATENTSCHRIFT

(11) **EP 0 638 620 B1**
(45) Veröffentlichungstag und Bekanntmachung des Hinweises auf die Patenterteilung: **17.03.1999**
(21) Anmeldenummer: 94112025.5
(22) Anmeldetag: 02.08.1994
(51) Int. Cl.: C09D 11/02

(54) **Farbstoffe für Drucktinten**
Dyes for use in printing inks
Colorants pour encres d'imprimerie

(30) Priorität: 13.08.1993 DE 4327257
(43) Veröffentlichungstag der Anmeldung: 15.02.1995
(73) Patentinhaber: BAYER AG, 51368 Leverkusen (DE)
(72) Erfinder: Haus, Artur, Dr., D-51491 Overath (DE); Richter, Rolf, Dr., D-51373 Leverkusen (DE); Michna, Martin, Dr., D-50259 Pulheim (DE)

(56) Entgegenhaltungen:
- DE-C- 705 780
- GB-A- 2 166 146
- US-A- 2 241 795

## Beschreibung

Die vorliegende Erfindung betrifft neue Drucktinten enthaltend bestimmte Diphenylmethanfarbstoffe, ein Verfahren zur Herstellung der Drucktinten sowie ein Verfahren zum Bedrucken von Trägermaterialien mit diesen Drucktinten.

Gegenstand der Erfindung sind also Drucktinten, enthaltend mindestens einen Farbstoff, der in Form der freien Säure der Formel (I) 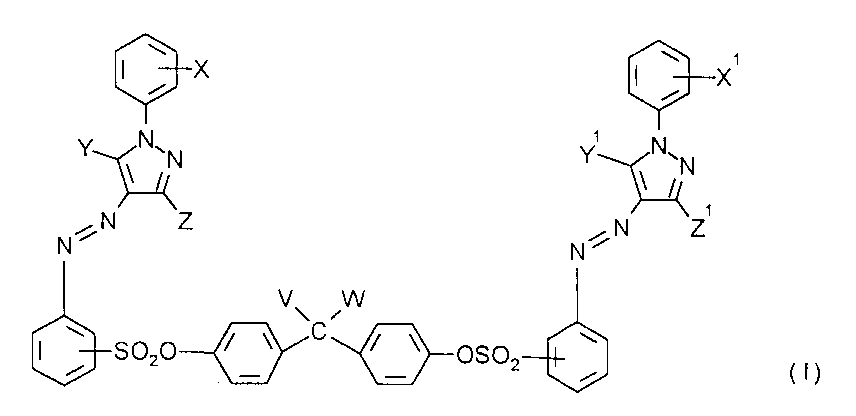 entspricht,
worin
- V und W: unabhängig voneinander für CH₃ oder C₂H₅ stehen,
oder
- V und W: gemeinsam mit dem C-Atom, an welches sie gebunden sind, für einen gesättigten carbocyclischen 5- oder 6-Ring stehen,
- X und X¹: unabhängig voneinander für SO₃H oder COOH stehen,
- Y und Y¹: unabhängig voneinander für NH₂ oder OH stehen,
- Z und Z¹: unabhängig voneinander für CH₃ oder COOH stehen
und wobei die Substituenten X und X¹ unabhängig voneinander jeweils in ortho-, meta- oder para-Position zum Stickstoffatom, über welches der Phenylring gebunden ist, stehen und die -SO₂O-Gruppen jeweils unabhängig voneinander in ortho-, meta- oder para-Position zu den Azogruppen stehen.

Bevorzugt sind Drucktinten, die mindestens einen Farbstoff der Formel (I),
worin
- V und W: für CH₃ stehen,
- X und X¹: gleich sind und beide entweder für SO₃H oder COOH stehen,
- Y und Y¹: gleich sind und entweder beide für NH₂ oder OH stehen,
- Z und Z¹: gleich sind und entweder beide für CH₃ oder COOH stehen,
enthalten.

Besonders bevorzugt sind Drucktinten, die mindestens einen Farbstoff der Formel (I), worin V und W für CH₃ stehen, enthalten.

Insbesondere bevorzugt sind Drucktinten, die den Farbstoff der Formel 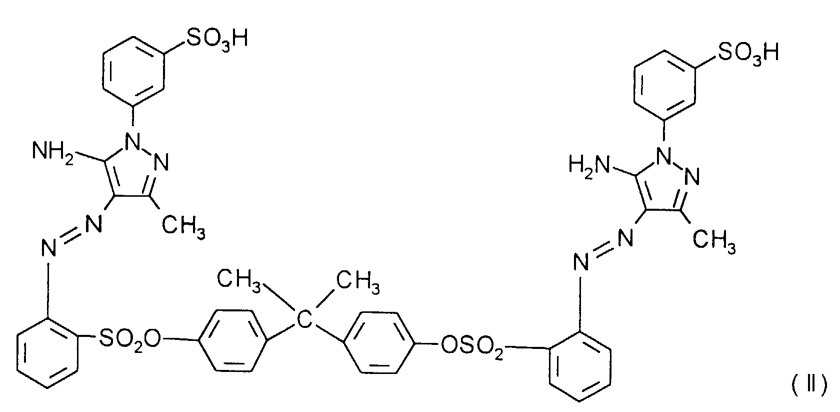 enthalten.

Die Farbstoffe der Formeln (I) und (II) können als freie Säuren oder als Salze, vorzugsweise als Alkalisalze wie Natrium-, Kalium- oder Lithiumsalze oder als Ammonium- oder gegebenenfalls substituierte Alkylammoniumsalze, vorliegen.

Die Farbstoffe der Formel (I) sind bekannt und können auf bekannte Art und Weise hergestellt werden (vgl. z.B. Deutsche Reichspatentschrift Nr. 705 780).

Zur Herstellung von Drucktinten wird mindestens ein Farbstoff der Formel (I) in Wasser und/oder einem oder mehreren organischen Lösungsmitteln, gegebenenfalls unter Zusatz von organischen und/oder anorganischen Säuren oder organischen und/oder anorganischen Basen, gelöst. Vorzugsweise wird ein Farbstoff der Formel (I) zur Herstellung der erfindungsgemäßen Drucktinten verwendet, der zuvor durch Anwendung von Membranverfahren wie beispielsweise Ultrafiltration, Mikrofiltration, Reversosmose oder deren Kombination gereinigt, entsalzt und ggf. aufkonzentriert wurde. Die bei den angegebenen Membranverfahren anfallenden Lösungen oder Suspensionen können direkt zur Herstellung der erfindungsgemäßen Drucktinten eingesetzt werden. Es ist aber auch möglich, die Lösungen oder Suspensionen zuvor in feste Formulierungen, z.B. duch Sprühtrocknung zu überführen.

Es ist auch möglich, die bei der Synthese des Farbstoffs anfallende Syntheselösung oder -suspension ohne Zwischenisolierung des Farbstoffs, gegebenenfalls unter Zusatz von anorganischen und/oder organischen Basen oder anorganischen und/oder organischen Säuren und gegebenenfalls unter Zusatz von einem oder mehreren organischen Lösungsmitteln und Wasser, in die erfindungsgemäßen Drucktinten zu überführen.

Die Syntheselösung oder -suspension wird vorzugsweise zuvor durch Anwendung von Membranverfahren wie beispielsweise Ultrafiltration, Mikrofiltration und Reversosmose oder deren Kombination gereinigt und entsalzt.

Vorzugsweise enthalten die erfindungsgemäßen Drucktinten 0,1 bis 20 Gew.-%, insbesondere 0,5 bis 15 Gew.-% und ganz besonders bevorzugt 0,5 bis 10 Gew.-% Farbstoff der Formel (I) gelöst in Wasser und/oder einem oder mehreren organischen Lösungsmitteln. Der pH-Wert der erfindungsgemäßen Drucktinten kann zwischen pH 5 und 12 liegen. Vorzugsweise haben die Drucktinten einen pH-Wert von 6 bis 10, insbesondere von 7 bis 9,5.

Zur Einstellung des pH-Wertes können übliche organische und/oder anorganische Säuren wie z.B. Salzsäure, Milchsäure, Paratoluolsulfonsäure, Essigsäure oder Zitronensäure oder organische und/oder anorganische Basen wie Alkalihydroxide oder Amine wie Methyldiethanolamin, Diethanolamin, Triethanolamin oder Polyglykolamine wie z.B. das Umsetzungsprodukt von Ammoniak mit 6 Mol Ethylenoxid eingesetzt werden. Weiterhin können die erfindungsgemäßen Drucktinten übliche Puffer wie z.B. Acetate, Citrate oder Phosphonate in den hierfür üblichen Mengen enthalten.

Des weiteren können die erfindungsgemäßen Drucktinten übliche Additive wie z.B. Tenside, Fungizide, Bakterizide oder Bindemittel wie z.B. Acrylatbinder in den für diese Additive üblichen Mengen enthalten.

Die erfindungsgemäßen Drucktinten enthalten im allgemeinen bis zu 50 Gew.-% organische Lösungsmittel, vorzugsweise jedoch weniger als 30 Gew.-%. Besonders bevorzugt sind Drucktinten, die 2 bis 30 Gew.-% organische Lösungsmittel enthalten.

Als organische Lösungsmittel kommen insbesondere wasserlösliche organische Lösungsmittel wie z.B. C₁-C₄-Alkanole wie Methanol, Ethanol, n-Propanol, Isopropanol, n-Butanol, sek.-Butanol, tert.-Butanol, Isobutanol; Pentandiole; Amide wie Formamide und Dimethylacetamid; Ketone oder Ketonalkohole wie Aceton und Diacetonalkohole; Ether wie Tetrahydrofuran und Dioxan; Stickstoffhaltige Heterocyclen wie 2-Pyrrolidon, N-Methyl-pyrrolid-2-on und 1,3-Dimethylimidazolid-2-on; Polyalkylenglykole wie Polyethylenglykol und Polypropylenglykol; Alkylenglykol und Thioglykole mit C₂-C₆-Alkyleneinheiten wie Ethylenglykol, Propylenglykol, Butylenglykol, Triethylenglykol, Thiodiglykol, Hexylenglykol und Diethylenglykol; andere Polyole wie Glycerin und 1,2,6-Hexantriol; Alkylether und Polyalkylether von Alkoholen wie 2-Methoxyethanol, 2-(2-Methoxy-ethoxy)ethanol, 2-(2-Ethoxyethoxy)ethanol, 2-Methoxy-2-ethoxy-2-ethoxyethanol, 2-[2-(2-Methoxyethoxy)ethoxy]ethanol, und 2-[2-(2-Ethoxyethoxy)ethoxy]ethanol in Frage.

Bevorzugte wasserlösliche organische Lösemittel sind Glykole und Glykolether wie Ethylenglykol, Diethylenglykol, Triethylenglykol, 2-Methoxy-2-ethoxy-2-ethoxyethanol; Polyethylenglykol mit einem Molgewicht bis 800; heterocyclische Ketone wie 2-Pyrrolidon, N-Methylpyrrolid-2-on und 1,3-Dimethylimidazolid-2-on; 1,5-Pentandiol. Bevorzugte Lösungsmittelgemische sind binäre Mischungen von Wasser und Diethylenglykol, Wasser und 2-Pyrrolidon, Wasser und 1,5-Pentandiol und ternäre Mischungen aus Wasser, Diethylenglykol und N-Methylpyrrolid-2-on.

Die erfindungsgemäßen Drucktinten können außer den Farbstoffen der Formel (I), vorzugsweise der Formel (II) auch noch einen oder mehrere für Drucktinten übliche Farbstoffe, wie z.B. die im Color Index gelisteten Farbstoffe Direktgelb 86 oder Säuregelb 23 enthalten, die beispielsweise zur Nuancierung dienen können.

Besonders bevorzugt sind Drucktinten, enthaltend eine Farbstoffmischung aus 50 bis 99 Gew.-%, insbesondere 80 bis 99 Gew.-%, Farbstoff der Formel (II) 1 bis 50 Gew.-%, insbesondere 1 bis 20 Gew.-%, Direktgelb 86 oder enthaltend eine Farbstoffmischung aus 50 bis 99 Gew.-%, insbesondere 80 bis 99 Gew.-%, Farbstoff der Formel (II) und 1 bis 50 Gew.-%, insbesondere 1 bis 20 Gew.-%, Säuregelb 23.

Die erfindungsgemäßen Drucktinten eignen sich zum Bedrucken unterschiedlicher Trägermaterialien, wie z.B. Papier, Holz, Textilien, Kunststoffe oder Metall.

Vorzugsweise werden die erfindungsgemäßen Drucktinten als Aufzeichnungsflüssigkeit für Tintenstrahlaufzeichnungssysteme verwendet. Bei den Tintenstrahlaufzeichnungssystemen handelt es sich z.B. um Inkjet-Drucker wie Thermal Jet, Bubble Jet, Piezo-Inkjet oder Ventil Inkjet. Bevorzugtes Aufzeichnungsmaterial für Inkjet-Drucker ist Papier.

Das Tintenstrahlaufzeichnungsverfahren ist an sich bekannt. Dabei werden Tröpfchen einer Schreibflüssigkeit aus einer oder mehreren kleinen Düsen gezielt auf ein Trägermaterial geschossen. Durch elektronische Aussteuerung werden die einzelnen Tröpfchen zu Schriftzeichen oder graphischen Mustern zusammengefaßt. Dabei ist es erforderlich, daß die Tinte mit dem Trägermaterial, bevorzugt Papier, wechselwirkt. Die Tinte sollte in das Papier eindringen, ohne zuviel auseinanderzulaufen, da sonst die Druckqualität leidet. Die gedruckte Information muß schnell trocknen, sowie wasserfest und wischfest sein. Viele Tinten besitzen einige der geforderten Eigenschaften auf Kosten der anderen Eigenschaften. Besonders die Wasserfestigkeit der Farbstoffe ist meistens unbefriedigend.

Überraschenderweise wurde gefunden, daß die erfindungsgemäßen Drucktinten beim Einsatz in Tintenstrahlaufzeichnungssystemen besonders wasserfeste Drucke ergeben. Die erfindungsgemäßen Drucktinten ergeben auf einer Vielzahl unterschiedlicher Papiere gute Wasserechtheiten. Besonders wichtig ist ihre Eignung für eine Vielzahl von nicht gestrichenen Papieren, sogenannten plain papers. Hier sind besonders die weit verbreiteten weitgehend neutralen Schreibpapiere zu nennen, die zunehmende Verbreitung finden.

Weiterer Gegenstand der Erfindung ist ein Verfahren zum Bedrucken von Trägermaterialien mittels eines Tintenstrahlaufzeichnungssystem, wobei als Aufzeichnungsflüssigkeit eine erfindungsgemäße Drucktinte eingesetzt wird.

Die folgenden Beispiele sollen die Erfindung erläutern ohne sie jedoch zu beschränken.

Prozente und Teile beziehen sich, soweit nichts anderes angegeben, jeweils auf das Gewicht.

### 1. Herstellung der erfindungsgemäßen Drucktinten

880 kg einer Lösung von 50 kg Farbstoff (II) in Wasser mit einem Trockengehalt von 7,7 % und einem Chloridgehalt von 0,73 % wird in einer handelsüblichen Druckpermeationsanlage ultrafiltriert. Zunächst werden 880 kg Permeat abgezogen und kontinuierlich durch 880 kg entmineralisiertes Wasser ersetzt. Anschließend wird durch Abzug von 280 kg Permeat auf 600 kg Lösung eingeengt. Diese Lösung wird durch Abzug von 1.200 kg Permeat und kontinuierlichen Ersatz durch entmineralisiertes Wasser weiter entsalzt. Danach wird durch Abzug von Permeat so weit aufkonzentriert bis der Fluß auf weniger als 200 1 x m⁻² x d⁻¹ abgefallen ist. Das verbleibende Konzentrat wird sprühgetrocknet und kann durch erneutes Auflösen in Wasser und/oder einem oder mehreren organischen Lösungsmittel zu einer erfindungsgemäßen Drucktinte verarbeitet werden, die sich hervorragend für das Ink-Jet-Druckverfahren eignet.

### 2. Bestimmung der Wasserechtheit Allgemeine Angaben zu den Versuchen

Die Drucktinten der Beispiele 1 bis 3 sowie die Vergleichstinten der Beispiele 4 bis 6 wurden durch Lösen der angegebenen Farbstoffe in den genannten Lösungsmitteln hergestellt.

Anschließend wurden die Farbstofflösungen jeweils durch ein 0,2 µm (0,0002 mm) Filter gepreßt und in gereinigte Kartuschen Typ 51608A der Firma Hewlett Packard für Deskjet 500® gefüllt. Auf dem Deskjet 500® wurde Agfa Kopierpapier Typ 701® vollflächig bedruckt.

Die Vergleichstinten der Beispiele 4 bis 6 enthalten für Tintenstrahldrucker übliche Gelbfarbstoffe. Bei den Vergleichstinten der Beispiele 7 und 8 handelt es sich um fertige Handelsprodukte, die ohne Filtration direkt eingesetzt werden.

Die Drucke wurden 24 Stunden im Raumklima gelagert und dann für 24 Stunden in vollentsalztem Wasser gelagert. Anschließend wurde das Papier aus dem Wasserbad entnommen und getrocknet. Bewertet wurde die Farbtiefe auf dem Originaldruck mit der verbliebenen Anfärbung des Papiers nach Lagerung unter Wasser.

Die Farbtiefe auf dem Papier wurde mittels eines Macbeth Filter Densitometers bestimmt und als optische Dichte angegeben. Hierbei wurde die optische Dichte bei der empfindlichsten Lichtwellenlänge bewertet. Bei gelben Farbstoffen ist dies der Blaufilter. Hohe Werte der optischen Dichte bedeuten tiefe Einfärbung des Substrates.

### Beispiel 1

Erfindungsgemäße Drucktinte:
90 Teile vollentsalztes Wasser, 10 Teile Diethylenglykol und 1,5 Teile Farbstoff (II)

### Beispiel 2

Erfindungsgemäße Drucktinte:
92 Teile vollentsalztes Wasser, 8 Teile 1,5-Pentandiol und 1,5 Teile Farbstoff (II)

### Beispiel 3

Erfindungsgemäße Drucktinte:
93 Teile vollentsalztes Wasser, 7 Teile 2-Pyrrolidon, 1,5 Teile Farbstoff (II).

### Beispiel 4

Vergleichstinte:
90 Teile vollentsalztes Wasser, 10 Teile Diethylenglykol, 0,75 Teile Direkt Yellow 86 und 0,75 Teile Acid Yellow 23

### Beispiel 5

Vergleichstinte:
92 Teile vollentsalztes Wasser, 8 Teile 1,5-Pentandiol, 0,75 Teile Direkt Yellow 86 und 0,75 Teile Acid Yellow 23

### Beispiel 6

Vergleichstinte:
90 Teile vollentsalztes Wasser, 10 Teile Diethylenglykol und 1,5 % Acid Yellow 23

### Beispiel 7

Vergleichstinte:
Handelsübliche Tinte enthaltend den Farbstoff Direct Yellow 86

### Beispiel 8

Vergleichstinte:
Handelsübliche Tinte enthaltend die Farbstoffe Direct Yellow 86 und Acid Yellow 23

Die Ergebnisse der Bestimmung der Wasserechtheit für die Beispiele 1 bis 8 sind in folgender Tabelle zusammengefaßt.

| Beispiel Nr. | OD* des Original-Drucks auf Papier | OD des Original-Drucks nach 24 Stunden wässern | OD in % nach 24 Stunden wässern |
|---|---|---|---|
| 1 | 0,72 | 0,71 | 98 % |
| 2 | 0,67 | 0,63 | 94 % |
| 3 | 0,69 | 0,67 | 96 % |
| 4 | 0,97 | 0,43 | 44 % |
| 5 | 0,88 | 0,39 | 44 % |
| 6 | 0,98 | 0,21 | 21 % |
| 7 | 1,14 | 0,75 | 66 % |
| 8 | 0,76 | 0,41 | 54 % |

| | | | |
|---|---|---|---|
| * OD = Optische Dichte, gemessen mit Blaufilter | | | |

### Beispiel 9

90 Teile vollentsalztes Wasser, 10 Teile Diethylenglykol, 2 Teile Farbstoff (II) und 1 Teil Direktgelb 86.

### Beispiel 10

90 Teile vollentsalztes Wasser, 10 Teile 1,5-Pentandiol, 2 Teile Farbstoff (II) und 0,25 Teile Direktgelb 86.

### Beispiel 11

92 Teile vollentsalztes Wasser, 10 Teile 1,5-Pentandiol, 2 Teile Farbstoff (II) und 2 Teile Säuregelb 23.

### Beispiel 12

93 Teile vollentsalztes Wasser, 10 Teile 1,5-Pentandiol, 1 Teil Farbstoff (II) und 0,25 Teile Säuregelb 23.

### Beispiel 13

90 Teile vollentsalztes Wasser, 10 Teile 1,5-Pentandiol, 2 Teile Farbstoff (II) und 0,25 Teile Direktgelb 86.

### Beispiel 14

90 Teile vollentsalztes Wasser, 1 Teil i-Propanol, 6 Teile Triethylenglykol, 4 Teile 1,2,6-Hexantriol, 3 Teile Farbstoff (II) und 0,3 Teile Direktgelb 86.

## Patentansprüche

1. Drucktinte, dadurch gekennzeichnet, daß sie mindestens einen Farbstoff enthält, der in Form der freien Säure der Formel 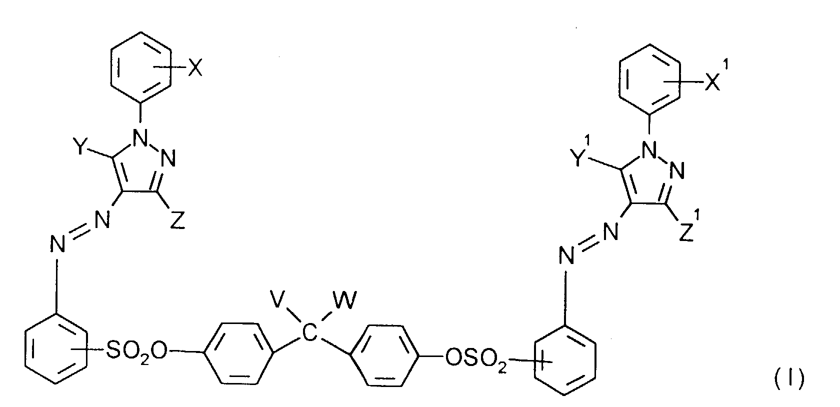 entspricht
worin
V und W unabhängig voneinander für CH₃ oder C₂H₅ stehen,
oder
V und W gemeinsam mit dem C-Atom, an welches sie gebunden sind, für einen gesättigten carbocyclischen 5- oder 6-Ring stehen,
X und X¹ unabhängig voneinander für SO₃H oder COOH stehen,
Y und Y¹ unabhängig voneinander für NH₂ oder OH stehen,
Z und Z¹ unabhängig voneinander für CH₃ oder COOH stehen
und wobei die Substituenten X und X¹ unabhängig voneinander jeweils in ortho-, meta- oder para-Position zum Stickstoffatom, über welches der Phenylring gebunden ist, stehen und die -SO₂O-Gruppen unabhängig voneinander jeweils in ortho-, meta- oder para-Position zu den Azogruppen stehen.

2. Drucktinte gemäß Anspruch 1, dadurch gekennzeichnet, daß sie mindestens einen Farbstoff enthält, der in Form der freien Säure der Formel (I) entspricht,
worin
V und W für CH₃ stehen,
X und X¹ gleich sind und beide entweder für SO₃H oder COOH stehen,
Y und Y¹ gleich sind und entweder beide für NH₂ oder OH stehen,
Z und Z¹ gleich sind und entweder beide für CH₃ oder COOH stehen.

3. Drucktinte gemäß Ansprüchen 1 und 2, dadurch gekennzeichnet, daß sie einen Farbstoff enthält, der in Form der freien Säure der Formel 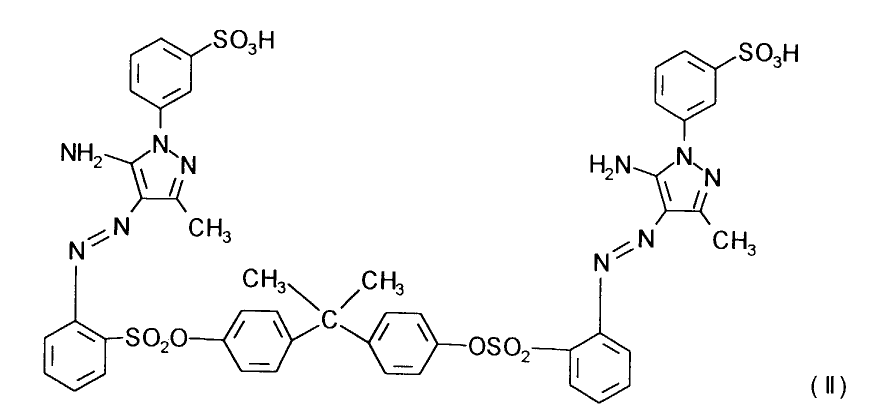 entspricht.

4. Drucktinte gemäß Ansprüchen 1 bis 3, dadurch gekennzeichnet, daß sie 0,1 bis 20 Gew.-% Farbstoff enthält.

5. Drucktinte gemäß Ansprüchen 1 bis 4, dadurch gekennzeichnet, daß sie einen pH-Wert zwischen 5 und 12 aufweist.

6. Drucktinte gemäß Ansprüchen 1 bis 5, dadurch gekennzeichnet, daß sie 2 bis 30 Gew.-% organisches, wasserlösliches Lösungsmittel enthält.

7. Drucktinte gemäß Ansprüchen 1 bis 6, dadurch gekennzeichnet, daß der Farbstoff der Formel (I) zuvor durch Anwendung eines Membranverfahrens gereinigt, entsalzt und gegebenenfalls aufkonzentriert wurde.

8. Drucktinte enthaltend einen Farbstoff gemäß Anspruch 1 und Direktgelb 86 oder Säuregelb 23.

9. Drucktinte enthaltend einen Farbstoff gemäß Anspruch 3 und Direktgelb 86 oder Säuregelb 23.

10. Verfahren zur Herstellung einer Drucktinte gemäß Anspruch 1, dadurch gekennzeichnet, daß mindesetens ein Farbstoff der Formel (I), der gegebenenfalls zuvor durch Anwendung eines Membranverfahrens gereinigt, entsalzt und gegebenenfalls aufkonzentriert wurde, in Wasser und/oder einem oder mehreren organischen Lösungsmittels gelöst wird.

11. Verfahren zum Bedrucken von Trägermaterialien mit einer Aufzeichnungsflüssigkeit unter Verwendung eines Tintenstrahlaufzeichnungssystems, dadurch gekennzeichnet, daß es sich bei der Aufzeichnungsflüssigkeit um eine Drucktinte gemäß Ansprüchen 1 bis 7 handelt.

12. Verfahren gemäß Anspruch 11, dadurch gekennzeichnet, daß es sich bei dem Trägermaterial um Papier, Holz, Textilien, Kunststoff oder Metall handelt.

## Claims

1. Printing ink, characterized in that it comprises at least one dyestuff which, in the form of the free acid, corresponds to the formula 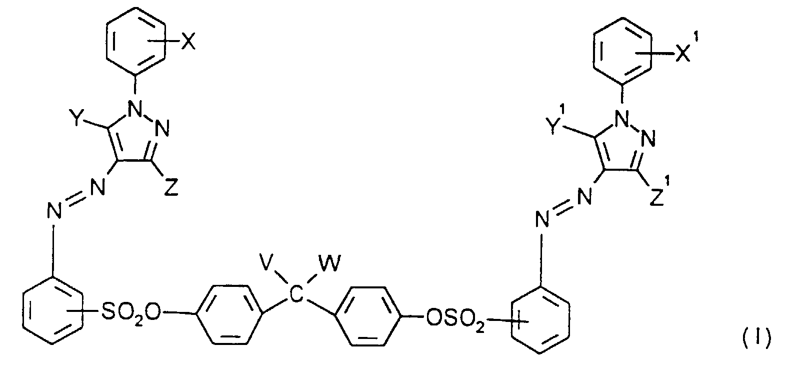 wherein
V and W independently of one another represent CH₃ or C₂H₅,
or
V and W, together with the C atom to which they are bonded, represent a saturated carbocyclic 5- or 6-membered ring,
X and X¹ independently of one another represent SO₃H or COOH,
Y and Y¹ independently of one another represent NH₂ or OH and
Z and Z¹ independently of one another represent CH₃ or COOH,
and wherein the substituents X and X¹ independently of one another are each in the ortho-, meta- or para-position relative to the nitrogen atom via which the phenyl ring is bonded, and the -SO₂O groups are each independently of one another in the ortho-, meta- or para-position relative to the azo groups.

2. Printing ink according to Claim 1, characterized in that it comprises at least one dyestuff which, in the form of the free acid, corresponds to the formula (I)
wherein
V and W represent CH₃,
X and X¹ are identical and are both either SO₃H or COOH,
Y and Y¹ are identical and are both either NH₂ or OH and
Z and Z¹ are identical and are both either CH₃ or COOH.

3. Printing ink according to Claims 1 and 2, characterized in that it comprises a dyestuff which, in the form of the free acid, corresponds to the formula

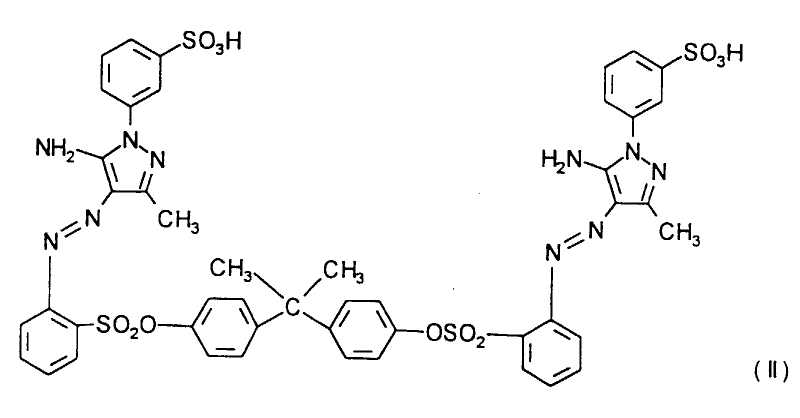

4. Printing ink according to Claims 1 to 3, characterized in that it comprises 0.1 to 20% by weight of dyestuff.

5. Printing ink according to Claims 1 to 4, characterized in that it has a pH of between 5 and 12.

6. Printing ink according to Claims 1 to 5, characterized in that it comprises 2 to 30% by weight of organic water-soluble solvent.

7. Printing ink according to Claims 1 to 6, characterized in that the dyestuff of the formula (I) has been purified, desalinated and if appropriate concentrated beforehand by using a membrane process.

8. Printing ink comprising a dyestuff according to Claim 1 and Direct Yellow 86 or Acid Yellow 23.

9. Printing ink comprising a dyestuff according to Claim 3 and Direct Yellow 86 or Acid Yellow 23.

10. Process for the preparation of a printing ink according to Claim 1, characterized in that at least one dyestuff of the formula (I), which has been purified, desalinated and if appropriate concentrated beforehand, if appropriate, by using a membrane process, is dissolved in water and/or one or more organic solvents.

11. Process for printing carrier materials with a recording liquid using an ink jet recording system, characterized in that the recording liquid is a printing ink according to Claims 1 to 7.

12. Process according to Claim 11, characterized in that the carrier material is paper, wood, textiles, plastic or metal.

## Revendications

1. Encre d'imprimerie, caractérisée en ce qu'elle contient au moins un colorant qui correspond à la forme de l'acide libre de formule 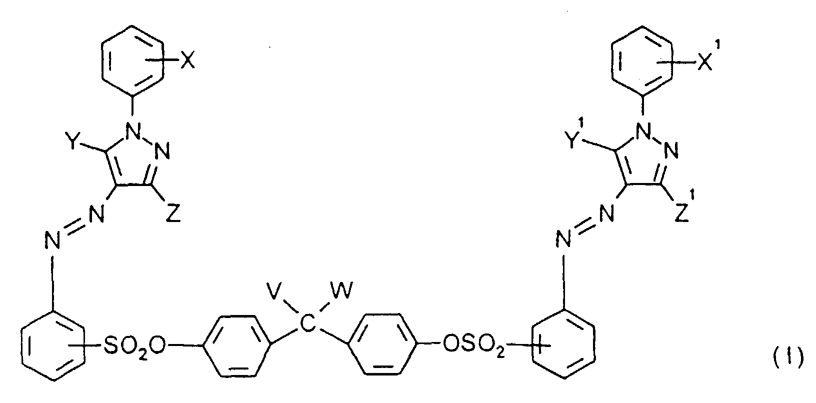 dans laquelle
V et W indépendamment l'un de l'autre sont CH₃ ou C₂H₅,
ou
V et W ensemble, avec l'atome de carbone auquel ils sont liés, sont un cycle à 5 ou 6 chaînons carbocyclique saturé,
X et X¹ indépendamment l'un de l'autre sont SO₃H ou COOH,
Y et Y¹ indépendamment l'un de l'autre sont NH₂ ou OH,
Z et Z¹ indépendamment l'un de l'autre sont CH₃ ou COOH et les substituants X et X¹ indépendamment l'un de l'autre sont chacun en position ortho, méta ou para par rapport à l'atome d'azote sur lequel le cycle phényle est lié, et les groupes -SO₂O- indépendamment l'un de l'autre sont en position ortho, méta ou para par rapport aux groupes azo.

2. Encre d'impression selon la revendication 1, caractérisée en ce qu'elle contient au moins un colorant qui correspond à la forme de l'acide libre de formule (I),
dans laquelle
V et W sont CH₃,
X et X¹ sont identiques et sont tous deux SO₃H ou COOH,
Y et Y¹ sont identiques et sont tous deux NH₂ ou OH,
Z et Z¹ sont identiques et sont tous deux CH₃ ou COOH.

3. Encre d'impression selon les revendications 1 et 2, caractérisée en ce qu'elle contient au moins un colorant qui correspond à la forme de l'acide libre de formule (II)

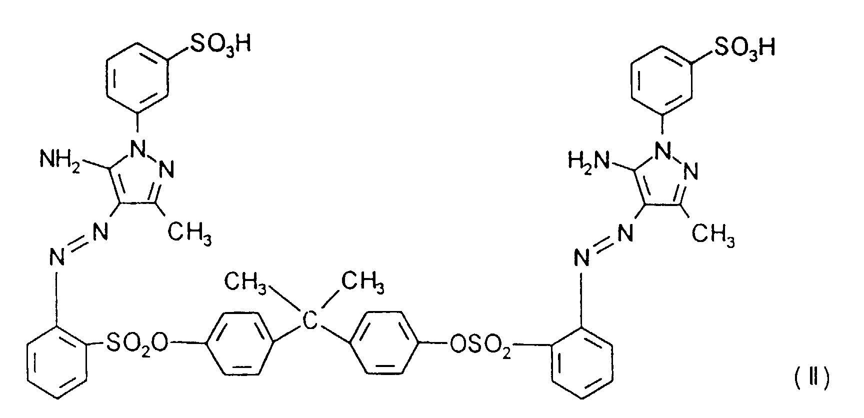

4. Encre d'impression selon les revendications 1 à 3, caractérisée en ce qu'elle contient 0,1 à 20 % en poids du colorant.

5. Encre d'impression selon les revendications 1 à 4, caractérisée en ce qu'elle présente une valeur de pH entre 5 et 12.

6. Encre d'impression selon les revendications 1 à 5, caractérisée en ce qu'elle contient de 2 à 30 % en poids d'un solvant hydrosoluble organique.

7. Encre d'impression selon les revendications 1 à 6, caractérisée en ce qu'au préalable le colorant de formule (I) est purifié, dessalé et éventuellement concentré en utilisant un procédé à membrane.

8. Encre d'impression contenant un colorant selon la revendication 1 et le jaune direct 86 ou le jaune acide 23.

9. Encre d'impression contenant un colorant selon la revendication 3 et le jaune direct 86 ou le jaune acide 23.

10. Procédé de préparation d'une encre d'impression selon la revendication 1, caractérisé en ce qu'au moins le colorant de formule (I), qui éventuellement au préalable est purifié, dessalé et éventuellement concentré en utilisant un procédé à membrane, est dissous dans l'eau et/ou un ou plusieurs solvant organiques.

11. Procédé d'impression de matériaux supports avec un liquide d'enregistrement en utilisant un système d'enregistrement par jet d'encre, caractérisé en ce que le liquide d'enregistrement est une encre d'impression selon les revendications 1 à 7.

12. Procédé selon la revendications 11, caractérisé en ce que le matériau support est du papier, du bois, un textile, une matière plastique ou un métal.
